(19) Europäisches Patentamt / European Patent Office / Office européen des brevets

(11) **EP 2 393 761 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(51) Int Cl.:
*H01C 7/10* (2006.01)     *H01C 7/18* (2006.01)
*H01C 7/112* (2006.01)     *C04B 35/453* (2006.01)

(21) Anmeldenummer: **10702118.0**

(22) Anmeldetag: **01.02.2010**

(86) Internationale Anmeldenummer:
**PCT/EP2010/051188**

(87) Internationale Veröffentlichungsnummer:
**WO 2010/089279 (12.08.2010 Gazette 2010/32)**

(54) **VARISTORKERAMIK**

VARISTOR CERAMIC

CERAMIQUE POUR VARISTORS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.02.2009 DE 102009007234**
**04.06.2009 DE 102009023846**

(43) Veröffentlichungstag der Anmeldung:
**14.12.2011 Patentblatt 2011/50**

(73) Patentinhaber: **Epcos AG**
**81669 München (DE)**

(72) Erfinder: **PIBER, Monika**
**A-8184 Anger (AT)**

(74) Vertreter: **Epping - Hermann - Fischer Patentanwaltsgesellschaft mbH Schloßschmidstraße 5 80639 München (DE)**

(56) Entgegenhaltungen:
**JP-A- 2002 246 207     US-A1- 2009 015 367**

- **NAHM ET AL: "The effect of sintering temperature on varistor properties of (Pr, Co, Cr, Y, Al)-doped ZnO ceramics" MATERIALS LETTERS, NORTH HOLLAND PUBLISHING COMPANY. AMSTERDAM, NL LNKD-DOI:10.1016/J.MATLET.2008.07.042, Bd. 62, Nr. 29, 30. November 2008 (2008-11-30), Seiten 4440-4442, XP025427455 ISSN: 0167-577X [gefunden am 2008-07-29]**
- **PARK J S ET AL: "Effects of Y2O3 on the microstructure and electrical properties of Pr-ZnO varistors" JOURNAL OF MATERIALS SCIENCE: MATERIALS IN ELECTRONICS, KLUWER ACADEMIC PUBLISHERS, BO LNKD-DOI:10.1007/S10854-005-0770-5, Bd. 16, Nr. 4, 1. April 2005 (2005-04-01), Seiten 215-219, XP019211840 ISSN: 1573-482X**

**Beschreibung**

Die Druckschrift "Nahm et al.: The effects of sintering temperature on varistor properties of (Pr, Co, Cr, Y, Al)-doped ZnO ceramics, Materials Letters 62 (2008), 4440-4442" offenbart eine ZnO-basierte Varistorkeramik mit Dotierungen von Pr in Kombination mit Y sowie weiteren Dotierungen von Co, Cr und Al offenbart.

Die Druckschrift "Park et al.: Effects of Y2O3 on the microstructure and electrical properties of Pr-ZnO varistors, Journal of Materials Science: Materials in Electronics 16 (2005), 215-219" offenbart eine ZnO-basierte Varistorkeramik mit Dotierungen von Pr in Kombination mit Y sowie weiteren Dotierungen von Co und Cr.

Es wird ein Herstellungsverfahren für eine Varistorkeramik nach dem Anspruch 1 angegeben.

Ein weit verbreitetes Problem von Varistorkeramiken ist es, eine niedrige Dielektrizitätskonstante ($\varepsilon_r$) zu erzielen. Gleichzeitig soll eine hohe Nichtlinearität bei hinreichender hoher Schaltfestigkeit im Hochstrombereich (ESD, 8/20) und geringem Leckstrom verwirklicht werden.

Die Aufgabe wird durch ein Verfahren zur Herstellung einer Varistorkeramik nach dem Anspruch 1 gelöst. Weitere Ausführungsformen des Herstellungsverfahrens für die Varistorkeramik sind Gegenstand weiterer Ansprüche.

Varistoren sind spannungsabhängige Widerstände und werden als Überspannungsschutz eingesetzt.

Eine Ausführungsform der Erfindung betrifft ein Herstellungsverfahren nach Anspruch 1 für eine Varistorkeramik, welche folgende Materialien umfasst:

- Zn als Hauptbestandteil,
- Pr zu einem Anteil von 0,1 bis 3 Atom-%,
- ein Metall M ausgewählt aus Y, Ho, Er, Yb, Lu zu einem Anteil von 0,1 bis 5 Atom-%; zusätzlich umfassend weitere Materialien, wie beansprucht.

In einer Ausführungsform steht M für Y oder Lu.

In einer Ausführungsform liegt der Anteil von Co in einem Bereich von 0,1 bis 10 Atom-%, wobei Co vorzugsweise als $Co^{2+}$ vorliegt.

In einer Ausführungsform liegt der Anteil von Ca in einem Bereich von 0,001 bis 5 Atom-%, wobei Ca vorzugsweise als $Ca^{2+}$ vorliegt.

In einer Ausführungsform liegt der Anteil von Si in einem Bereich von 0,001 bis 0,5 Atom-%, wobei Si vorzugsweise als $Si^{4+}$ vorliegt.

In einer Ausführungsform liegt der Anteil von Al in einem Bereich von 0,001 bis 0,1 Atom-%, wobei Al vorzugsweise als $Al^{3+}$ vorliegt.

In einer Ausführungsform liegt der Anteil von Cr in einem Bereich von 0,001 bis 5 Atom-%, wobei Cr vorzugsweise als $Cr^{3+}$ vorliegt.

In einer Ausführungsform liegt der Anteil von B in einem Bereich von 0,001 bis 5 Atom-%, wobei B vorzugsweise als $B^{3+}$ vorliegt.

Für hohe Übertragungsraten von digitalen Signalen werden Vielschichtvaristoren mit einer hohen ESD-Robustheit und Stoßstromstabilität und einer geringen Kapazität benötigt. Die geringe Kapazität ist notwendig, um das zu übertragende Signal möglichst wenig zu beeinflussen.

Die Kapazität eines Varistors wird durch die folgende Formel repräsentiert:

$$C = \varepsilon_0 \; \varepsilon_r \; A/d, \quad (1)$$

wobei C die Kapazität, $\varepsilon_0$ die Permittivität von Vakuum, $\varepsilon_r$ die relative Permittivität, A die Fläche zwischen zwei Elektroden und d die Dicke der Schicht zwischen den Elektroden ist.

Die wahre Dielektrizitätskonstante $\varepsilon_{eff}$ für dieses intergranulare Material wird nach Levinson et al. (J. Appl. Phys. Vol. 46; No. 3; 1975) durch folgende Formel beschrieben:

$$C = \varepsilon_{eff} \; \varepsilon_0 \; [A/(z{*}d)] \quad (2)$$

wobei C die Kapazität, $\varepsilon_0$ die Permittivität von Vakuum, z die Anzahl der Korn-Korn-Kontakte zwischen zwei Elektroden, A die Fläche zwischen den Elektroden und d die Sperrschichtdicke eines Korn-Korn-Kontaktes ist.

Eine konventionelle Methode, die Kapazität eines Vielschichtvaristors zu reduzieren (Gl. (1)), erfolgt durch Reduktion der Fläche A und Erhöhung der Schichtdicke d. Dies läuft allerdings dem Vielschichtkonzept zuwider, da eine Reduktion der Fläche A zu einer Reduktion der maximalen Energieaufnahmefähigkeit und damit der Stoßstromstabilität sowie der Robustheit bezüglich ESD-Pulsen führt.

In einer Ausführungsform umfasst die Varistorkeramik, über Cobaltoxid und Praseodymoxid hinausgehende Zusätze eines Salzes oder Oxids des Metalls M mit geringer Basizität (kleiner Ionenradius), wie zum Beispiel $Y^{3+}$ oder $Lu^{3+}$ ($r_k^{3+}$=93 pm).

Dadurch wird eine geringere Polarisierbarkeit der Barriere und eine Steuerung der Barriereeigenschaften (Barrierenhöhe und Breite der Verarmungszone) erreicht sowie eine Varistorkeramik mit einer verringerten Kapazität pro Korn-Korn-Kontakt und einer gleichzeitig hohen Nichtlinearität und ESD-Stabilität erhalten.

Durch die Reduktion der Kapazität pro Korn-Korn-Kontakt können Varistorbauteile mit niedriger Kapazität bei gleicher Fläche zwischen den Elektroden und damit gleich guter ESD-Robustheit und Stoßstromstabilität erhalten werden.

Im Detail sind die genannten Vorteile in Ausführungsbeispielen beschrieben.

In einer Ausführungsform ist ein Oxid oder Salz des Metalls M, deren Kationen einen vergleichsweise geringen Ionenradius (z.B. $Y^{3+}$, $Lu^{3+}$) aufweisen, im der Varistorkeramik gelöst, so dass diese eine geringere Kapazität pro Korn-Korn-Kontakt aufweist.

In einem Ausführungsbeispiel werden dem ZnO die Oxide von Praseodym (0.1-3 Atom%) sowie Cobalt (0.1-10 Atom%) als Dotanden und außerdem Kalzium (0.001-5 Atom%), Silizium (0.001-0.5 Atom%), Aluminium (0.001-0.01 Atom%), Chrom (0.001-5 Atom%) in Oxidform sowie Bor in gebundener Form (0.001-5 Atom%) zwecks Steuerung der Gefügeausbildung im Sinterprozess und Yttrium in oxidischer Form (0.1-5 Atom%) zugesetzt.

Die Figur 1 zeigt als schematisches Fließschema den Herstellungsprozess von Vielschichtvaristoren umfassend die Verfahrensschritte: A1 Einwaage, A2 Vormahlung, A3 Trocknung, A4 Sieben, A5 Kalzination, A6 Nachmahlung, A7 Trocknung, A8 Sieben, B1 Schlickerbildung, B2 Grünfolien, C1 Bedrucken mit leitfähiger Paste, C2 Stapeln, C3 Cutten, D1 Entkohlung, D2 Sinterung, E1 Aufbringen der Außenterminierung, E2 Einbrennen.

Die Figur 2 zeigt schematisch den Aufbau eines Vielschichtvaristors umfassend die Innenelektroden (1), das Varistorkeramikmaterial (2) und die Außenterminierung (3).

In einer Ausführungsform liegt der Keramikkörper des Vielschichtvaristors als monolithischer Keramikkörper vor.

Die Figur 3 zeigt links die Kennlinie eines ESD-Pulses und rechts die Kennlinie eines 8/20-Pulses. Die Herstellung des Vielschichtvaristors kann nach Figur 1 erfolgen.

Diese Bestandteile werden in oxidischer, gelöster oder gebundener Form in den in Tabelle 1 genannten Verhältnissen eingewogen (A1), vorgemahlen (A2), getrocknet (A3), gesiebt (A4) und anschließend zwischen 400 °C und 1000 °C kalziniert (A5), nachgemahlen (A6), sprühgetrocknet (A7) und gesiebt (A8).

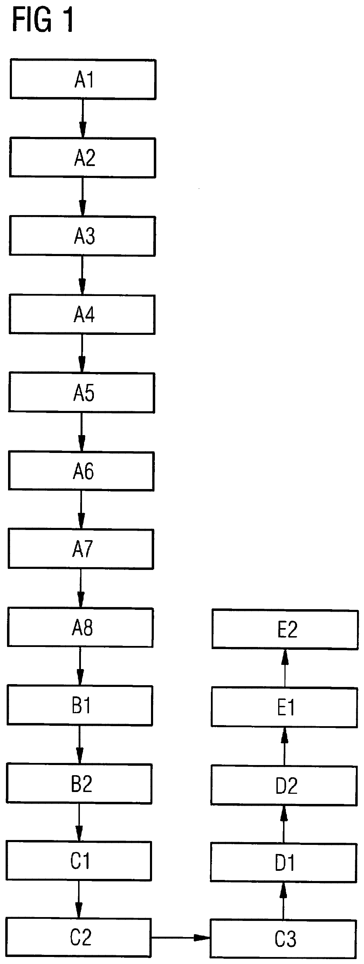

Aus dem auf diese Weise hergestellten Pulver wird durch Zugabe eines Binders, Dispergiermittels sowie eines Lösungsmittels ein Schlicker hergestellt (B1), aus dem Folien mit einer Schichtdicke zwischen 5 und 60 $\mu m$ gezogen werden (B2), die danach nach analog dem Prozessdiagramm in Abbildung 1, zu Vielschichtvaristoren verarbeitet werden: Dabei werden die Grünfolien mit einer leitfähigen Paste bedruckt (C1), gestapelt und anschließend gecuttet (C2, C3).

Der Binder wird im folgenden Entkohlungsschritt (D1) aus den Grünteilen bei Temperaturen zwischen 180 °C und 500 °C ausgebrannt und die Bauteile bei einer Temperatur zwischen 900 und 1400 °C gesintert (D2). Anschließend wird die Außenterminierungsschicht (E1) aufgebracht und diese Schicht wird bei Temperaturen zwischen 500 °C und 1000 °C eingebrannt (E2).

In einer bevorzugten Variante liegt die Sintertemperatur im Verfahrensschritt D2) zwischen 1100 °C und 1400 °C.

In einer weiteren bevorzugten Variante liegt die Temperatur für das Einbrennen im Verfahrensschritt E2) zwischen 600 °C und 1000 °C.

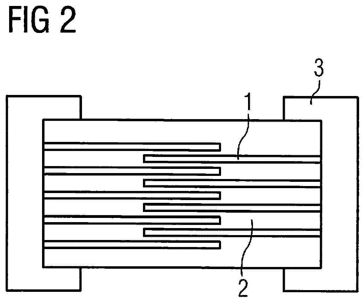

Figur 2 zeigt in schematischer Seitenansicht ein Vielschichtbauelement. Hierbei folgen die Innenelektroden (1) und die Schicht des Varistorkeramikmaterial (2) alternierend aufeinander. Die Innenelektroden (1) sind abwechselnd jeweils mit der einen bzw. anderen Außenterminierung (3) verbunden. Im Mittleren Bereich überlappen die Innenelektroden (1).

Einen typischen Aufbau eines 0402 Vielschichtvaristors (Abmessungen 1.0 mm x 0.5 mm x 0.5 mm) zeigt Figur 2: Wobei die Überlappungsfläche der Innenelektroden (2) sowie die Anzahl der Innenelektroden an die gewünschten elektrischen Bauteileigenschaften angepasst werden können.

Die elektrische Charakterisierung der Bauteile erfolgte durch Bestimmung des Leckstromes, der Varistorspannung, des Nichtlinearitätskoeffizienten, der 8/20-Pulsstabilität, der ESD-Pulsstabilität, der 8/20-Klemmenspannung bei 1 A ($U_K$).

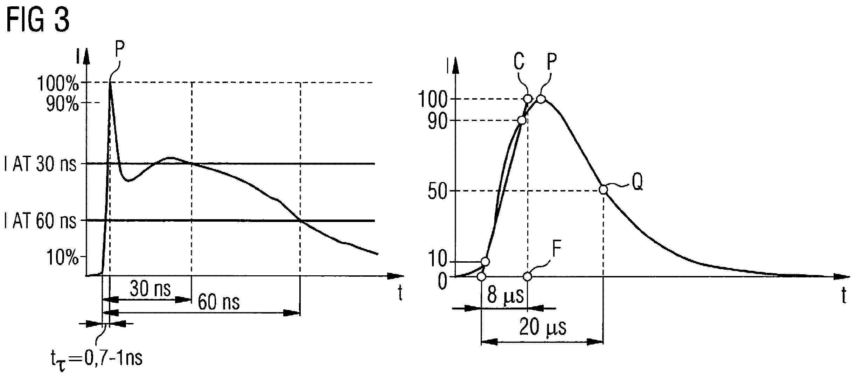

Figur 3 zeigt links und rechts jeweils einen Pulsverlauf. Hierbei ist jeweils der Strom I gegen die Zeit t aufgetragen.

Die spezifische Varistorspannung $E_V$ wird bei 1 mA bestimmt.

Die Kapazität wird bei 1 V und 1 kHz gemessen.

Die ESD-Stabilität wird mit Pulsen der Figur 3 links bestimmt: Dazu wurden die Bauteile mit +/- 10 ESD-Pulse (siehe Figur 3 rechts) belastet. Die prozentuelle Änderung von $U_V$ vor und nach den Pulsen sowie des Leckstromes vor und nach den Pulsen in Prozent werden berechnet und dürfen keine prozentuelle Änderung von mehr als 10 % aufweisen.

Außerdem wurden 8/20 Robustheitstests (Pulsform siehe Figur 3 rechts) durchgeführt. Dabei wurden die Bauteile mit 8/20-Pulsen (siehe Figur 3 rechts) bei 1 A, 5 A, 10 A, 15 A, 20 A und 25 A belastet, sowie die prozentuelle Änderung der Varistorspannung und des Leckstrom nach der Belastung bestimmt.

Die Nichtlinearitätskoeffizienten wurden nach den folgenden Gleichungen bestimmt:

$$\alpha_1 \ (10\mu A/1mA) = \log \ (1*10^{-3}/10*10^{-6})/\log \ (V_{10mA}/V_{10\mu A})$$

$$\alpha_2 \ (1mA/1A) = \log \ (1/1*10^{-3})/\log \ (V_{1A}/V_{1mA})$$

$$\alpha_3 \ (1mA/20A) = \log \ (20/1*10^{-3})/\log \ (V_{20A}/V_{1mA})$$

Stabilitätstests wurden unter 80 % AVR bei 125 °C durchgeführt. Wobei der Leckstrom $I_L$ unter diesen Bedingungen keine steigende Charakteristik aufweisen sollte.

Tabelle 1 Einwaage: (Einheiten in Atom-%)

|     | A      | B      | C      | D      |
|-----|--------|--------|--------|--------|
| Zn  | 97.9   | 97.4   | 96.9   | 96.4   |
| Co  | 1.5    | 1.5    | 1.5    | 1.5    |
| Pr  | 0.5    | 0.5    | 0.5    | 0.5    |
| Cr  | 0.1    | 0.1    | 0.1    | 0.1    |
| Ca  | 0.02   | 0.02   | 0.02   | 0.02   |
| Si  | 0.02   | 0.02   | 0.02   | 0.02   |
| Y   | 0      | 0.5    | 1      | 1.5    |
| B   | 0.01   | 0.01   | 0.01   | 0.01   |
| Al  | 60 ppm | 60 ppm | 60 ppm | 60 ppm |

Tabelle 2 Elektrische Ergebnisse

| Material | $E_V$ [V/mm] | $\varepsilon_r$ | $\varepsilon_r$/Ev | $\alpha_1$ | $\alpha_2$ | $\alpha_3$ | 8/20 Stabilität | ESD Stabilität |
|----------|--------------|-----------------|--------------------|------------|------------|------------|-----------------|----------------|
| A        | 268          | 2200            | 8.2                | 11         | 8          | 7          | > 20 A          | > 30 kV        |
| B        | 269          | 1737            | 7.9                | 18         | 10         | 8          | > 20 A          | > 30 kV        |
| C        | 336          | 1316            | 3.7                | 17         | 11         | 9          | > 20 A          | > 30 kV        |
| D        | 525          | 677             | 1.3                | 29         | 14         | 11         | > 20 A          | > 30 kV        |

Die elektrischen Daten sind in Tabelle 2 zusammengefasst. Durch Zugabe von Yttrium steigt die spezifische Varistorspannung von 268 V/mm auf 525 V/mm und gleichzeitig sinkt die relative Permittivität. Diese Änderung ist auf die kornwachstumshemmenden Eigenschaften von Yttriumverbunden zurückzuführen.

Um einen korngrößenunabhängigen Parameter zu erhalten, wurde das Verhältnis $\varepsilon_r$/Ev gebildet. Tabelle 2 zeigt, dass dieses Verhältnis mit zunehmender Yttriumzugabe abnimmt. Gleichzeitig werden bei gleich guter Nichtlinearität hohe ESD- und 8/20-Stabilitäten erhalten.

In einer Ausführungsform liegt der Anteil von Zn vorzugsweise bei größer 90 Atom-%, wobei Zn vorzugsweise als $Zn^{2+}$ vorliegt.

In einer Ausführungsform liegt der Anteil von Pr vorzugsweise in einem Bereich von 0,5 bis 0,6 Atom-%, wobei Pr vorzugsweise als $Pr^{3+/4+}$ vorliegt.

In einer Ausführungsform liegt der Anteil von M vorzugsweise in einem Bereich von 1 bis 5 Atom-%, wobei M vorzugsweise als $M^{2+}$ / $M^{3+}$ / $M^{4+}$ vorliegt.

In einer Ausführungsform liegt der Anteil von Co vorzugsweise in einem Bereich von 1,5 bis 2,0 Atom-%, wobei Co vorzugsweise als $Co^{2+}$ vorliegt.

In einer Ausführungsform liegt der Anteil von Ca vorzugsweise in einem Bereich von 0,01 bis 0,03 Atom-%, wobei Ca vorzugsweise als $Ca^{2+}$ vorliegt.

In einer Ausführungsform liegt der Anteil von Si vorzugsweise in einem Bereich von 0,01 bis 0,15 Atom-%, wobei Si vorzugsweise als $Si^{4+}$ vorliegt.

In einer Ausführungsform liegt der Anteil von Al vorzugsweise in einem Bereich von 0,005 bis 0,01 Atom-%, wobei Al vorzugsweise als $Al^{3+}$ vorliegt.

In einer Ausführungsform liegt der Anteil von Cr vorzugsweise in einem Bereich von 0,05 bis 0,2 Atom-%, wobei Cr vorzugsweise als $Cr^{3+}$ vorliegt.

In einer Ausführungsform liegt der Anteil von B vorzugsweise in einem Bereich von 0,001 bis 0,01 Atom-%, wobei B vorzugsweise als $B^{3+}$ vorliegt.

In einer Ausführungsform liegt die relative Permittivität $\varepsilon_r$ unter 1000.

In Folge der Vermeidung von Alkalicarbonatzusätzen kann eine hohe Reproduzierbarkeit in der technischen Prozessführung erreicht werden.

Im Herstellungsverfahren kann Boroxid unter weitgehender Vermeidung von Verdampfungsverlusten zwecks Steuerung von Gefügeausbildung als Sinterhilfsmittel im Bereich hoher Temperaturen aus geeigneten Vorstufen freigesetzt werden.

Die Vielschichtvaristoren der Bauformen 0402 und 0201 zeichnen sich durch ausgezeichnete Ergebnisse beim Leckstrom, der ESD-Stabilität, 8/20-Robustheit, Langzeitstabilität und Nichtlinearität aus.

Unter Hauptbestandteil ist ein Anteil von mindestens 50 Atom-% zu verstehen. Der Anteil an Zn beträgt vorzugsweise mehr als 70 Atom-%, wobei Zn vorzugsweise als $Zn^{2+}$ vorliegt.

In einer Varianten des Herstellungsverfahrens der Varistorkeramik umfasst das Herstellungsverfahren die Verfahrensschritte:

a) Kalzinieren des Rohkeramikmaterials, b) Herstellung eines Schlickers, c) Fertigen von Grünfolien, d) Entbindern der Grünfolien und e) Sintern der Grünfolien aus d).

In einer weiteren Variante des Herstellungsverfahrens umfasst dieses zusätzlich zwischen den Verfahrenschritten d) und e) den Verfahrensschritt d1) Aufbauen eines Bauteils.

Bezugszeichenliste

1)  Innenelektrode
2)  Varistorkeramikmaterial
3)  Außenterminierung

**Patentansprüche**

1.  Verfahren zur Herstellung einer Varistorkeramik, welche folgende Materialien umfasst:

    - Zn als Hauptbestandteil,
    - Pr zu einem Anteil von 0,1 bis 3 Atom-%,
    - ein Metall M ausgewählt aus Y, Ho, Er, Yb, Lu zu einem Anteil von 0,1 bis 5 Atom-%,
    zusätzlich umfassend
    - Co zu einem Anteil von 0,1 bis 10 Atom-%,
    - Ca zu einem Anteil von 0,001 bis 5 Atom-%,
    - Si zu einem Anteil von 0,001 bis 0,5 Atom-%,
    - Al zu einem Anteil von 0,001 bis 0,1 Atom-%,
    - Cr zu einem Anteil von 0,001 bis 5 Atom-%,
    - B zu einem Anteil von 0,001 bis 5 Atom-%,

umfassend die Verfahrensschritte:

a) Kalzinieren des Rohkeramikmaterials,
b) Herstellung eines Schlickers,
c) Fertigen von Grünfolien,
d) Entbindern der Grünfolien,
e) Sintern der Grünfolien aus d) bei einer Temperatur von 900 bis 1400 °C.

**2.** Verfahren nach Anspruch 1, wobei M für Y oder Lu steht.

**3.** Verfahren nach einem der vorhergehenden Ansprüche, wobei die Varistorkeramik eine relative Permittivität $\varepsilon_r$ von kleiner 2000 aufweist.

**4.** Verfahren nach einem der vorhergehenden Ansprüche, wobei durch den Zusatz von M die relative Permittivität des Varistormaterials reduziert wird.

**5.** Verfahren nach einem der vorhergehenden Ansprüche, wobei die Sintertemperatur zwischen 1000 und 1300 °C liegt.

**6.** Varistorkeramik hergestellt nach einem der vorhergehenden Ansprüche, wobei die Varistorkeramik keine Alkalimetalle aufweist.


**Claims**

**1.** Method for producing a varistor ceramic comprising the following materials:

- Zn as the main constituent,
- Pr in a proportion of from 0.1 to 3 atom%,
- a metal M selected from Y, Ho, Er, Yb, Lu in a proportion of from 0.1 to 5 atom%,

additionally comprising

- Co in a proportion of from 0.1 to 10 atom%,
- Ca in a proportion of from 0.001 to 5 atom%,
- Si in a proportion of from 0.001 to 0.5 atom%,
- Al in a proportion of from 0.001 to 0.1 atom%,
- Cr in a proportion of from 0.001 to 5 atom%,
- B in a proportion of from 0.001 to 5 atom%,

said method comprising the following method steps:

a) calcining the raw ceramic material,
b) producing a slurry,
c) making green sheets,
d) debindering the green sheets,
e) sintering the green sheets from d) at a temperature of from 900 to 1400°C.

**2.** Method according to Claim 1,
wherein M is Y or Lu.

**3.** Method according to either of the preceding claims, wherein the varistor ceramic has a relative permittivity of less than 2000.

**4.** Method according to one of the preceding claims, wherein the relative permittivity of the varistor material is reduced by the addition of M.

**5.** Method according to one of the preceding claims, wherein the sintering temperature is between 1000 and 1300°C.

**6.** Varistor ceramic produced in accordance with one of the preceding claims, wherein the varistor ceramic comprises no alkali metals.

**Revendications**

**1.** Procédé de fabrication d'une céramique pour varistors, qui comprend les matériaux suivants:

- Zn comme composant principal,
- Pr en une teneur de 0,1 à 3 % atomiques,
- un métal M sélectionné parmi Y, Ho, Er, Yb, Lu en une teneur de 0,1 à 5 % atomiques

comprenant en outre

- Co en une teneur de 0,1 à 10 % atomiques,
- Ca en une teneur de 0,001 à 5 % atomiques,
- Si en une teneur de 0,001 à 0,5 % atomiques,
- Al en une teneur de 0,001 à 0,1 % atomiques,
- Cr en une teneur de 0,001 à 5 % atomiques,
- B en une teneur de 0,001 à 5 % atomiques,

comprenant les étapes de procédé suivantes:

a) calcination du matériau céramique brut,
b) préparation d'une barbotine,
c) fabrication de feuilles vertes,
d) élimination du liant des feuilles vertes,
e) frittage des feuilles vertes de d) à une température de 900 à 1400 °C.

**2.** Procédé selon la revendication 1, dans lequel M représente Y ou Lu.

**3.** Procédé selon l'une quelconque des revendications précédentes, dans lequel la céramique pour varistors présente une permittivité relative $\varepsilon_r$ inférieure à 2000.

**4.** Procédé selon l'une quelconque des revendications précédentes, dans lequel on réduit la permittivité relative du matériau pour varistors par l'ajout de M.

**5.** Procédé selon l'une quelconque des revendications précédentes, dans lequel la température de frittage se situe entre 1000 et 1300°C.

**6.** Céramique pour varistors fabriquée selon l'une quelconque des revendications précédentes, dans laquelle la céramique pour varistors ne présente pas de métaux alcalins.

## FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **NAHM et al.** The effects of sintering temperature on varistor properties of (Pr, Co, Cr, Y, Al)-doped ZnO ceramics. *Materials Letters,* 2008, vol. 62, 4440-4442

- **PARK et al.** Effects of Y2O3 on the microstructure and electrical properties of Pr-ZnO varistors. *Journal of Materials Science: Materials in Electronics,* 2005, vol. 16, 215-219
- **LEVINSON et al.** *J. Appl. Phys.,* 1975, vol. 46 (3